# EUROPEAN PATENT APPLICATION

(11) **EP 3 952 063 A1**
(43) Date of publication of application: **09.02.2022**
(21) Application number: 20778532.0
(22) Date of filing: 31.01.2020
(51) Int. Cl.: H02K 1/18

(54) **STATOR CORE**

(30) Priority: 28.03.2019 JP 2019063587
(71) Applicant: Nidec Corporation, Minami-ku, Kyoto-shi, Kyoto 601-8205 (JP)
(72) Inventor: HONDA,Takeshi, Kyoto-shi, Kyoto 601-8205 (JP)
(74) Representative: Viering, Jentschura & Partner mbB Patent- und Rechtsanwälte
(86) International application number: PCT/JP2020/003709
(87) International publication number: WO 2020/195158

(57) **Abstract**

An annular stator core includes a core piece in which a first laminated member and a second laminated member are laminated. Each of a first core back portion and a first core back portion adjacent thereto includes either a first protrusion or a first recess, and the first protrusion and the first recess face each other. Each of a second core back portion and a second core back portion adjacent thereto includes either a second protrusion or a second recess, and the second protrusion and the second recess face each other. The first core back portion and the adjacent first core back portion are in contact with each other on a radially outer side and on a radially inner side sandwiching a vertex of the first protrusion, and the second core back portion and the adjacent second core back portion are in contact with each other on a radially outer side and on a radially inner side sandwiching a vertex of the second protrusion.

## Description

### TECHNICAL FIELD

The present invention relates to a stator core.

### BACKGROUND ART

As a stator core of a motor, a stator core in which a plurality of stator core plates punched into the shape of the stator core by a press device or the like are laminated in the thickness direction is known. The stator core includes a plurality of teeth provided radially, and a core back annularly connecting the teeth on a radially outer side of the teeth. In addition, a stator core in which a plurality of core pieces having teeth and segment core backs are annularly arranged is known.

As such a stator core, for example, as disclosed in Patent Literature 1, there is a stator core in which core pieces in which stator core plates having different shapes are alternately laminated are annularly arranged. In a core piece constituting the stator core, a protrusion at a circumferential end portion in the core back portion constituting the segment core back is formed in a tapered shape in the thickness direction of the stator core plate. That is, the thickness of the core back portion of the stator core plate constituting the core piece decreases toward the circumferential end. Therefore, in the adjacent core pieces, the protrusion at the end of one core piece is smoothly guided to a recess at an end of the other core piece. In the stator core configured as described above, core pieces can be coupled to each other easily and reliably.

### CITATIONS LIST

### PATENT LITERATURE

Patent Literature 1: JP 7-222383 A

### SUMMARY OF INVENTION

### TECHNICAL PROBLEMS

In the configuration disclosed in Patent Literature 1 described above, even if a cumulative error in the thickness direction occurs in the core pieces due to the lamination of the stator core plates, the core pieces can be easily coupled to each other. However, it is difficult to quickly and accurately align the core pieces in the radial direction, and there is a possibility that accuracy of roundness of the stator core decreases.

An object of the present invention is to provide a stator core in which radial alignment between core pieces can be performed rapidly and easily.

### SOLUTIONS TO PROBLEMS

A stator core according to an embodiment of the present invention is an annular stator core extending along a central axis. The stator core includes a core piece in which at least a first laminated member and a second laminated member are laminated. The first laminated member includes a first core back portion extending in a circumferential direction, and a first tooth portion extending radially inward from the first core bag portion. The second laminated member includes a second core back portion extending in the circumferential direction, and a second tooth portion extending radially inward from the second core bag portion. Both circumferential end positions of the first core back portion are different from both circumferential end positions of the second core back portion. One of the first core back portion and a first core back portion of an adjacent core piece in the circumferential direction has a first protrusion protruding in the circumferential direction, and the other of the first core back portion and the first core back portion of the adjacent core piece has a first recess recessed in the circumferential direction. The first protrusion and the first recess face each other. One of the second core back portion and a second core back portion of the adjacent core piece has a second protrusion protruding in the circumferential direction, and the other of the second core back portion and the second core back portion of the adjacent core piece has a second recess recessed in the circumferential direction. The second protrusion and the second recess face each other. The first core back portion and the first core back portion of the adjacent core piece are in contact with each other on a radially outer side and a radially inner side sandwiching a vertex of the first protrusion, and the second core back portion and the second core back portion of the adjacent core piece are in contact with each other on a radially outer side and a radially inner side sandwiching a vertex of the second protrusion.

### ADVANTAGEOUS EFFECTS OF INVENTION

According to the stator core according to an embodiment of the present invention, radial alignment between the core pieces can be performed quickly and easily.

### BRIEF DESCRIPTION OF DRAWINGS

FIG. 1 is a perspective view illustrating a schematic configuration of a stator core according to a first embodiment.
FIG. 2 is a plan view illustrating a schematic configuration of a first laminated member.
FIG. 3 is a plan view illustrating a schematic configuration of a second laminated member.
FIG. 4 is a partial side view illustrating a connection state between core pieces.
FIG. 5 is a partially enlarged plan view illustrating a state in which radial positions of core pieces are adjusted in the first embodiment.
FIG. 6(a) is a plan view showing the shape of a first laminated member and FIG. 6(b) is a plan view showing the shape of a second laminated member, in a second embodiment.
FIG. 7 is a partially enlarged plan view illustrating a state in which radial positions of core pieces are adjusted in the second embodiment.
FIG. 8(a) is a plan view illustrating the shape of a first laminated member, and FIG. 8(b) is a plan view illustrating the shape of a second laminated member, in a third embodiment.
FIG. 9 is a partial plan view illustrating a connection state between core pieces in the third embodiment.

### DESCRIPTION OF EMBODIMENTS

Hereinafter, an embodiment of the present invention will be described in detail with reference to the drawings. The same or corresponding parts in the drawings are denoted by the same reference numerals, and the description thereof will not be repeated. Further, the dimensions of constituent members in each drawing do not faithfully represent the actual dimensions of the constituent members, the dimensional ratio of each constituent member, or the like.

Further, in the description provided below, a direction parallel to the central axis P of a stator core 1 is referred to as an "axial direction", "axial", or "axially", a direction orthogonal to the central axis P is referred to as a "radial direction", "radial", or "radially", and a direction along an arc with the central axis P as the center is referred to as a "circumferential direction", "circumferential", or "circumferentially". However, there is no intention to limit the direction at the time of use of the stator core 1 according to the invention by these definitions of the directions.

Further, in the following description, the expressions such as "fixed", "connected", "joined" and "attached" (hereinafter referred to as "fixed" or the like) are not limited to the case where the members are directly fixed or the like to each other. It also includes the case where it is fixed or the like via another member. That is, in the following description, the expression such as fixation includes the meaning of direct and indirect fixation or the like between members.

An embodiment of the present invention relates to a configuration of a stator core 1 used for a motor. In the present specification, the "stator core 1" refers to a set of a plurality of core pieces 2 in a state of being annularly connected around the central axis P. The "core piece 2" refers to a portion having the teeth 4 around which no conductive wire is wound and a core back portion that becomes annular in a connected state. Each layer of the core piece 2 forming the core piece 2 by being laminated is referred to as a "laminated member". The "laminated member" does not necessarily refer to a member having only one layer of the members constituting the core piece 2, and includes a member having a plurality of layers having the same shape or substantially the same shape and continuously laminated.

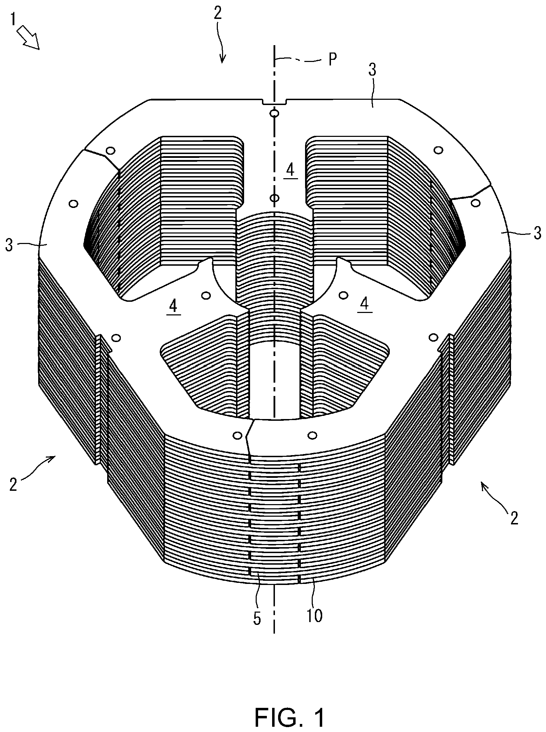

FIG. 1 shows a schematic configuration of the stator core 1 according to an embodiment of the present invention.

As illustrated in FIG. 1, the stator core 1 is an iron core constituting a stator. The stator core 1 includes a plurality of core pieces 2 annularly arranged around the central axis P. The stator core 1 has three core pieces 2. Each core piece 2 includes a segment core back 3 constituting a part of a cylindrical core back, and a tooth 4.

The number of core pieces 2 constituting the stator core 1 is appropriately determined according to the number of teeth 4. That is, when the number of teeth 4 of the stator core 1 is larger than three, the number of core pieces 2 is larger than three.

The core piece 2 includes a first laminated member 5 and a second laminated member 10 made of electromagnetic steel sheets. In the core piece 2, two first laminated members 5 and two second laminated members 10 are alternately laminated in the thickness direction. In the present embodiment, as long as the core piece 2 has a configuration in which the first laminated member 5 and the second laminated member 10 are alternately laminated, the number of units of the first laminated member 5 and the second laminated member 10 to be laminated or the like may be arbitrarily set. The first laminated member 5 and the second laminated member 10 are connected to each other by being caulked at a caulking portion 2a in a state of being alternately laminated in the thickness direction.

A circumferential end of the segment core back 3 in one core piece 2 contacts a circumferential end of the segment core back 3 of another core piece 2 adjacent to the segment core back 3 in the circumferential direction. As a result, an annular core back of the stator core 1 is configured of the segment core backs 3 in the plurality of core pieces 2. In this manner, the plurality of core pieces 2 are in contact with each other to constitute the stator core 1 including the core back configured of the plurality of segment core backs 3 and the plurality of teeth 4.

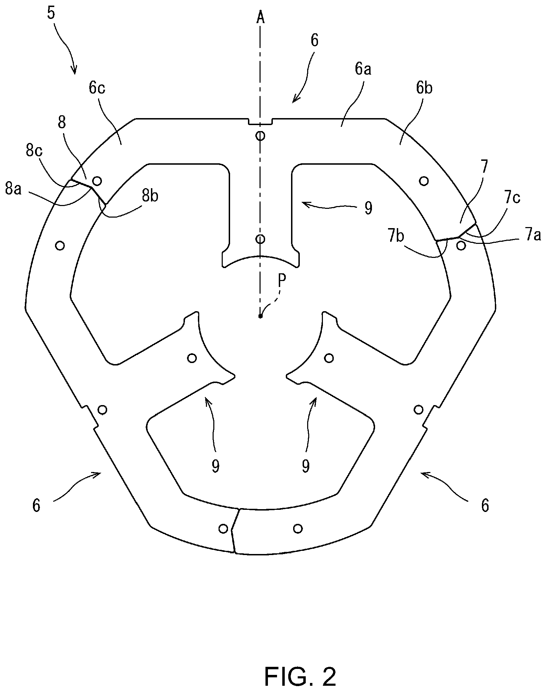

Next, the first laminated member 5 and the second laminated member 10 constituting the core piece 2, and the core piece 2 will be described in detail with reference to FIGS. 2 to 4.

As illustrated in FIG. 2, the first laminated member 5 of the core piece 2 includes a first core back portion 6 and a first tooth portion 9.

The first core back portion 6 is a portion constituting an annular portion of the stator core 1. The first core back portion 6 includes a straight portion 6a extending in a direction perpendicular to a straight line A with the straight line A passing through the central axis P being the center, and a first-side arc portion 6b and a second-side arc portion 6c extending from both ends of the straight portion 6a along a circumferential direction of an arc with the central axis P being the center. The straight portion 6a is line-symmetric with respect to the straight line A. That is, the straight portion 6a extends with an equal length in both directions with the straight line A as a symmetry line. The first-side arc portion 6b extending from the first-side end of the straight portion 6a is longer than the second-side arc portion 6c extending from the second-side end of the straight portion 6a by a predetermined length in the circumferential direction.

The first core back portion 6 has a first protrusion 7 protruding in the circumferential direction at the first-side end in the circumferential direction. The first protrusion 7 has a vertex 7a protruding in the circumferential direction. In addition, the first protrusion 7 includes, as linear first protrusion-side contact portions, a protrusion-side upward inclined surface 7b extending from the inner periphery of the first core back portion 6 toward the vertex 7a of the first protrusion 7, and a protrusion-side downward inclined surface 7c extending from the outer periphery of the first core back portion 6 toward the vertex 7a of the first protrusion 7. That is, the first protrusion 7 has a shape including a gradient in which the radius from the central axis P increases radially inward with the vertex 7a being interposed therebetween, and a gradient in which the radius from the central axis P decreases radially outward with the vertex 7a being interposed therebetween.

The first core back portion 6 has a first recess 8 that is recessed in the circumferential direction at the second-side end in the circumferential direction. The first recess 8 has a vertex 8a recessed in the circumferential direction. In addition, the first recess 8 has, as linear first recess-side contact portions, a recess-side upward inclined surface 8b extending from the inner periphery of the first core back portion 6 to the vertex 8a of the first recess 8, and a recess-side downward inclined surface 8c extending from the outer periphery of the first core back portion 6 to the vertex 8a of the first recess 8. That is, the first recess 8 has a shape including a gradient in which the radius from the central axis P increases radially inward with the vertex 8a being interposed therebetween, and a gradient in which the radius from the central axis P decreases radially outward with the vertex 8a being interposed therebetween. The outer shape of the first recess-side contact portion is the same as the outer shape of the first protrusion-side contact portion. As a result, to the first recess 8 of the first core back portion 6, the first protrusion 7 of the adjacent first core back portion 6 is fitted, whereby the first recess-side contact portion and the first protrusion-side contact portion come into contact with each other.

The first tooth portion 9 is a portion constituting one of the plurality of teeth 4 of the stator core 1. The first tooth portion 9 extends radially inward from the center of the straight portion 6a of the first core back portion 6. The first tooth portion 9 is line-symmetric with the straight line A passing through the central axis P being the center. The first tooth portion 9 has a shape in which a radially inner end portion expands in the circumferential direction.

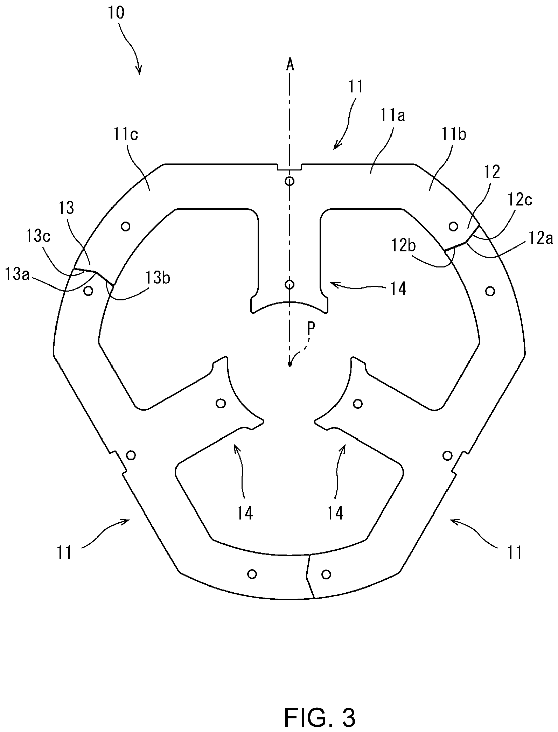

As illustrated in FIG. 3, the second laminated member 10 of the core piece 2 includes a second core back portion 11 and a second tooth portion 14.

The second core back portion 11 is a portion constituting an annular portion of the stator core 1. The second core back portion 11 includes a straight portion 11a extending in a direction perpendicular to the straight line A with the straight line A passing through the central axis P being the center, and a first-side arc portion 11b and a second-side arc portion 11c respectively extending from both ends of the straight portion 11a along a circumferential direction of an arc with the central axis P being the center. The straight portion 11a is line-symmetric with respect to the straight line A. That is, the straight portion 11a extends with an equal length in both directions with the straight line A as a symmetry line. The first-side arc portion 11b extending from a first-side end of the straight portion 11a is shorter than the second-side arc portion 11c extending from a second-side end of the straight portion 11a by a predetermined length in the circumferential direction.

The second core back portion 11 has a second protrusion 12 protruding in the circumferential direction at the first-side end in the circumferential direction. The second protrusion 12 has a vertex 12a protruding in the circumferential direction. In addition, the second protrusion 12 includes, as linear second protrusion-side contact portions, a protrusion-side upward inclined surface 12b extending from the inner periphery of the second core back portion 11 toward the vertex 12a of the second protrusion 12, and a protrusion-side downward inclined surface 12c extending from the outer periphery of the second core back portion 11 toward the vertex 12a of the second protrusion 12. That is, the second protrusion 12 has a shape including a gradient in which the radius from the central axis P increases radially inward with the vertex 12a interposed therebetween, and a gradient in which the radius from the central axis P decreases radially outward with the vertex 12a interposed therebetween.

The second core back portion 11 has a second recess 13 that is recessed in the circumferential direction at the second-side end in the circumferential direction. The second recess 13 has a vertex 13a recessed in the circumferential direction. In addition, the second recess 13 includes, as a linear second recess-side contact portion, a recess-side upward inclined surface 13b extending from the inner periphery of the second core back portion 11 toward the vertex 13a of the second recess 13, and a recess-side downward inclined surface 13c extending from the outer periphery of the second core back portion 11 toward the vertex 13a of the second recess 13. That is, the second recess 13 has a shape including a gradient in which the radius from the central axis P increases radially inward with the vertex 13a being interposed therebetween, and a gradient in which the radius from the central axis P decreases radially outward with the vertex 13a being interposed therebetween. The outer shape of the second recess-side contact portion is the same as the outer shape of the second protrusion-side contact portion. As a result, to the second recess 13 of the second core back portion 11, the second protrusion 12 of the adjacent second core back portion 11 is fitted, whereby the second recess-side contact portion and the second protrusion-side contact portion come into contact with each other.

The second tooth portion 14 is a portion constituting one of the plurality of teeth 4 of the stator core 1. The second tooth portion 14 extends radially inward from the center of the straight portion 11a of the second core back portion 11. The second tooth portion 14 is line-symmetric about the straight line A passing through the central axis P. The second tooth portion 14 has a shape in which a radially inner end portion expands in the circumferential direction.

In each embodiment of the present application, each of the vertex 7a of the first protrusion 7 and the vertex 12a of the second protrusion 12 refers to a portion where an inclined surface and an inclined surface intersect with each other, but it is not limited to a portion where a plane and a plane intersect with each other, and may be the center of a portion protruding most in the circumferential direction. For example, a case where the vertex 7a or the vertex 12a is a curved surface, and a case where the first protrusion 7 or the second protrusion 12 has an arc shape or a trapezoidal shape are also included. When the vertex 7a of the first protrusion 7 or the vertex 12a of the second protrusion is a curved surface, a virtual point which is an intersection of a tangent and a tangent of the curved surface is included. When the first protrusion 7 or the second protrusion 12 has a trapezoidal shape or the like and a portion protruding most in the circumferential direction is flat, the center of the flat portion is set.

In each embodiment of the present application, each of the vertex 8a of the first recess 8 and the vertex 13a of the second recess 13 refers to a portion where an inclined surface and an inclined surface intersect with each other, but it is not limited to a portion where a plane and a plane intersect with each other, and may be at the center of a portion that is recessed most in the circumferential direction. For example, a case where the vertex 8a or the vertex 13a is a curved surface or a case where the first recess 8 or the second recess 13 has an arc shape or a trapezoidal shape is also included. In a case where the vertex 8a or the vertex 13a is a curved surface, a virtual point which is an intersection of a tangent and a tangent of the curved surface is included. When the first recess 8 or the second recess 13 has a trapezoidal shape or the like and the portion recessed most in the circumferential direction is flat, the center of the flat portion is set.

As illustrated in FIG. 1, a predetermined number of the first laminated members 5 and a predetermined number of the second laminated members 10 are alternately laminated two by two. The first laminated member 5 and the second laminated member 10 are laminated with the first tooth portion 9 and the second tooth portion 14 coinciding with each other. The segment core back 3 of the core piece 2 includes the first core back portion 6 of the first laminated member 5 and the second core back portion 11 of the second laminated member 10 that are laminated. The teeth 4 of the core piece 2 include the first tooth portion 9 of the first laminated member 5 and the second tooth portion 14 of the second laminated member 10 that are laminated.

As illustrated in FIGS. 2 to 4, in the first core back portion 6 of the first laminated member 5, the length of the first-side arc portion 6b is longer than the length of the second-side arc portion 6c by a predetermined length. Similarly, in the second core back portion 11 of the second laminated member 10, the length of the first-side arc portion 11b is shorter than the length of the second-side arc portion 11c by a predetermined length. Therefore, in the core piece 2, both circumferential end positions of the first core back portion 6 are different from both circumferential end positions of the second core back portion 11. At the first side in the circumferential direction of the core piece 2, the first core back portion 6 protrudes in the circumferential direction from the second core back portion 11. At the second side in the circumferential direction of the core piece 2, the second core back portion 11 protrudes in the circumferential direction from the first core back portion 6. That is, the first core back portions 6 are disposed in a comb-teeth shape on the first side in the circumferential direction of the core piece 2. The second core back portions 11 are disposed in a comb-teeth shape on the second side in the circumferential direction of the core piece 2.

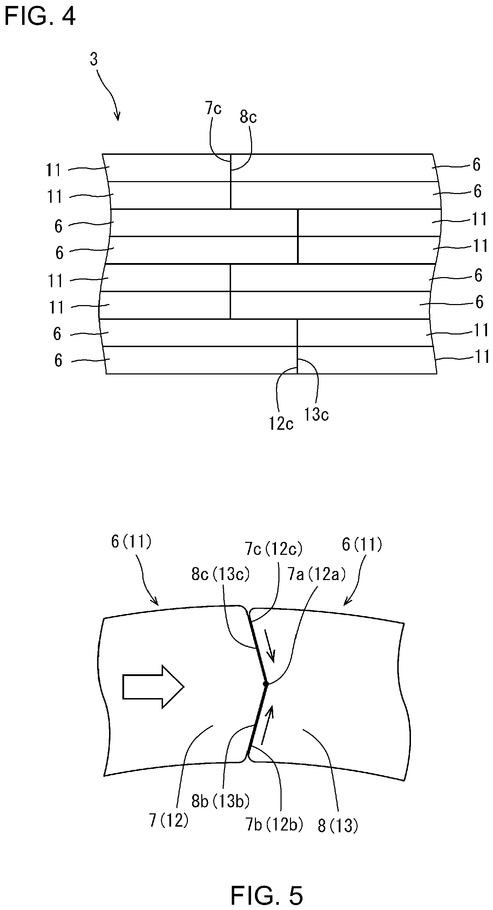

As illustrated in FIG. 4, the first-side end in the circumferential direction of the segment core back 3 in one core piece 2 is connected to the second-side end in the circumferential direction of the segment core back 3 in another core piece 2 adjacent to the first side in the circumferential direction. At the first-side end in the circumferential direction of the segment core back 3, the second core back portion 11 of the adjacent segment core back 3 enters between the first core back portion 6 and the first core back portion 6. Further, the second-side end in the circumferential direction of the segment core back 3 in one core piece 2 is connected with the first-side end in the circumferential direction of the segment core back 3 in another core piece 2 adjacent to the second side in the circumferential direction. At the second-side end in the circumferential direction of the segment core back 3, the first core back portion 6 of the adjacent segment core back 3 enters between the second core back portion 11 and the second core back portion 11. As a result, one core piece and another core piece 2 adjacent thereto in the circumferential direction are connected with each other in a state where the first core back portion 6 and the second core back portion 11 overlap each other in the thickness direction.

As illustrated in FIGS. 2 and 3, in the segment core back 3 in one core piece 2, the first core back portion 6 is in contact with the first core back portion 6 of the segment core back 3 of another core piece 2 adjacent thereto, and the second core back portion 11 is in contact with the second core back portion 11 of the segment core back 3 of another core piece 2 adjacent thereto. That is, between the segment core back 3 of one core piece 2 and the segment core back 3 of another core piece 2 adjacent thereto, the first protrusion 7 of the first core back portion 6 and the first recess 8 of the first core back portion 6 adjacent thereto face each other, and the second protrusion 12 of the second core back portion 11 and the second recess 13 of the second core back portion 11 adjacent thereto face each other.

Further, the first protrusion 7 of the first core back portion 6 in one core piece 2 is in contact with the first recess 8 of the first core back portion 6 in another core piece 2 adjacent thereto. The first recess 8 of the first core back portion 6 in one core piece 2 is in contact with the first protrusion 7 of the first core back portion 6 in another core piece 2 adjacent thereto. Similarly, the second protrusion 12 of the second core back portion 11 in one core piece 2 is in contact with the second recess 13 of the second core back portion 11 in another core piece 2 adjacent thereto. The second recess 13 of the second core back portion 11 in one core piece 2 is in contact with the second protrusion 12 of the second core back portion 11 in another core piece 2 adjacent thereto.

As illustrated in FIG. 5, between the first protrusion 7 of the first core back portion 6 and the first recess 8 of the first core back portion 6 adjacent thereto, the first protrusion-side contact portion and the first recess-side contact portion are in contact with each other. That is, between the first protrusion 7 and the first recess 8, the protrusion-side upward inclined surface 7b of the first protrusion-side contact portion and the recess-side upward inclined surface 8b of the first recess-side contact portion are in contact with each other, and the protrusion-side downward inclined surface 7c of the first protrusion-side contact portion and the recess-side downward inclined surface 8c of the first recess-side contact portion are in contact with each other. That is, the first protrusion 7 and the first recess 8 are in contact with each other at two positions, that is, the protrusion-side upward inclined surface 7b and the recess-side upward inclined surface 8b on the radially inner side, and the protrusion-side downward inclined surface 7c and the recess-side downward inclined surface 8c on the radially outer side, with the vertex 7a of the first protrusion 7 being interposed therebetween.

Between the second protrusion 12 of the second core back portion 11 and the second recess 13 of the second core back portion 11 adjacent thereto, the second protrusion-side contact portion and the second recess-side contact portion are in contact with each other. That is, between the second protrusion 12 and the second recess 13, the protrusion-side upward inclined surface 12b of the second protrusion-side contact portion and the recess-side upward inclined surface 13b of the second recess-side contact portion are in contact with each other, and the protrusion-side downward inclined surface 12c of the second protrusion-side contact portion and the recess-side downward inclined surface 13c of the second recess-side contact portion are in contact with each other. That is, the second protrusion 12 and the second recess 13 are in contact with each other at two positions, that is, the protrusion-side upward inclined surface 12b and the recess-side upward inclined surface 13b on the radially inner side, and the protrusion-side downward inclined surface 12c and the recess-side downward inclined surface 13c on the radially outer side, with the vertex 12a of the second protrusion 12 being interposed therebetween.

When a circumferential force indicated by a black arrow is applied to the segment core back 3 of one core piece 2 and the segment core back 3 of another core piece 2 adjacent thereto, in the first core back portion 6 which is a part of the segment core back 3, a component force toward the vertex 8a of the first recess 8 indicated by an arrow along the recess-side upward inclined surface 8b and a component force toward the vertex 8a of the first recess 8 indicated by an arrow along the recess-side downward inclined surface 8c are generated with respect to the adjacent first core back portion 6. The radial position of the first core back portion 6 with respect to the adjacent first core back portion 6 is determined by the balance between the radially outward force from the radially inner side toward the vertex 8a of the first recess 8 and the radially inward force from the radially outer side toward the vertex 8a of the first recess 8. Similarly, in the second core back portion 11 that is a part of the segment core back 3, the radial position with respect to the adjacent second core back portion 11 is determined by the balance between the component force from the radially inner side indicated by an arrow toward the vertex 13a of the second recess 13 and the component force from the radially outer side toward the vertex 13a of the second recess 13. That is, the position of one core piece 2 in the radial direction with respect to the other core pieces 2 adjacent thereto is determined by applying a force in the circumferential direction.

In the stator core 1 including the plurality of core pieces 2, the first protrusion 7 of the first core back portion 6 and the first recess 8 of the first core back portion 6 adjacent thereto, and the second protrusion 12 of the second core back portion 11 and the second recess 13 of the second core back portion 11 adjacent thereto, in the segment core back 3 of one core piece, are in contact with each other only at two positions with the vertex of each protrusion being interposed therebetween, so that the alignment function by the radially inward force and the radially outward force is not hindered. In addition, since the linear first protrusion-side contact portion and the linear first recess-side contact portion are in contact with each other, and the linear second protrusion-side contact portion and the linear second recess-side contact portion are in contact with each other, the radially inward force and the radially outward force are determined by the shapes of the first protrusion 7 and the second protrusion 12 and the first recess 8 and the second recess 13. As a result, the radial position between the core pieces 2 can be adjusted to an appropriate position.

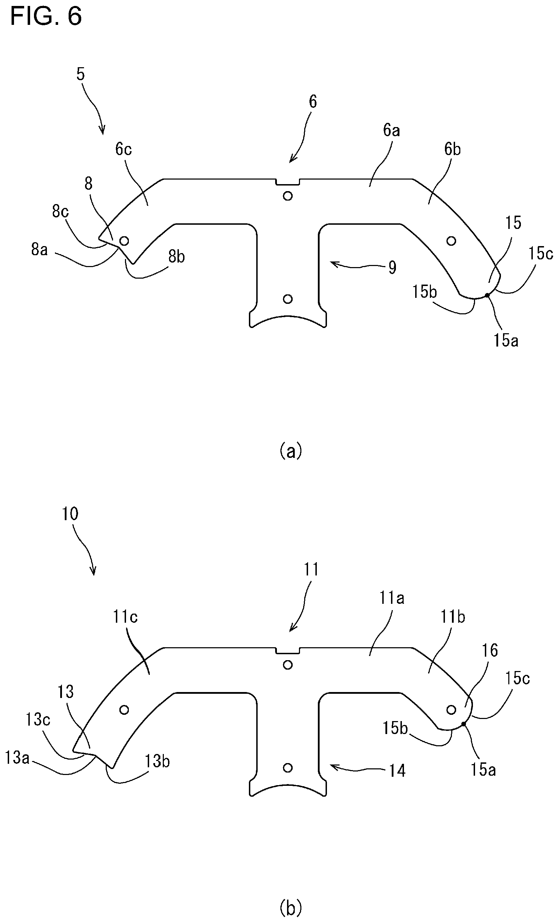

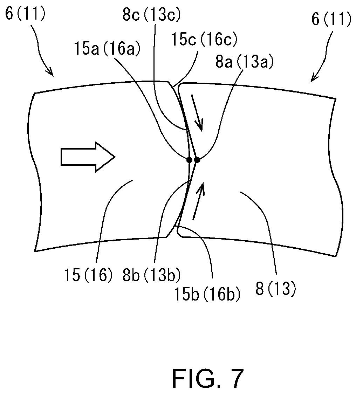

Next, a stator core 1 that is a second embodiment of the stator core 1 according to the present invention will be described with reference to FIGS. 6 and 7. The stator core 1 according to the following embodiment is applied in place of the stator core 1 in the stator core 1 illustrated in FIGS. 1 to 7, and the names, figure numbers, and reference numerals used in the description are used to indicate the same components. In the following embodiment, specific description of the same points as those of the embodiment already described will be omitted, and different points will be mainly described.

As illustrated in FIG. 6(a), the first core back portion 6 has a first protrusion 15 protruding in the circumferential direction at first-side end in the circumferential direction. The first protrusion 15 has an arc portion protruding in the circumferential direction.

In the first protrusion 15, a point protruding most in the circumferential direction in the arc portion is defined as a vertex 15a. The first protrusion 15 has, as a first protrusion-side contact portion, a protrusion-side upward curved surface 15b extending from the inner periphery of the first core back portion 6 toward the vertex 15a of the first protrusion 15, and a protrusion-side downward curved surface 15c extending from the outer periphery of the first core back portion 6 toward the vertex 15a of the first protrusion 15.

As illustrated in FIG. 6(b), the second core back portion 11 has a second protrusion 16 protruding in the circumferential direction at first-side end in the circumferential direction. The second protrusion 16 has an arc portion protruding in the circumferential direction. In the second protrusion 16, a point that protrudes most in the circumferential direction in the arc portion is defined as a vertex 16a. The second protrusion 16 has, as a second protrusion-side contact portion, a protrusion-side upward curved surface 16b extending from the inner periphery of the second core back portion 11 toward the vertex 16a of the second protrusion 16, and a protrusion-side downward curved surface 16c extending from the outer periphery of the second core back portion 11 toward the vertex 16a of the second protrusion 16.

As illustrated in FIG. 7, between the first protrusion 15 of the first core back portion 6 and the first recess 8 of the first core back portion 6 adjacent thereto, the protrusion-side upward curved surface 16b of the first protrusion-side contact portion and the recess-side upward inclined surface 8b of the first recess-side contact portion are in contact with each other, and the protrusion-side downward curved surface 16c of the first protrusion-side contact portion and the recess-side downward inclined surface 8c of the first recess-side contact portion are in contact with each other. That is, the first protrusion 15 of the first core back portion 6 is in contact with the linear first recess-side contact portion of the adjacent first core back portion 6. The first protrusion 15 and the first recess 8 are in contact with each other at two positions, that is, the protrusion-side upward curved surface 16b and the recess-side upward inclined surface 8b on the radially inner side, and the protrusion-side downward curved surface 16c and the recess-side downward inclined surface 8c on the radially outer side, with the vertex 15a of the first protrusion 15 being interposed therebetween.

Between the second protrusion 16 of the second core back portion 11 and the second recess 13 of the adjacent second core back portion 11, the protrusion-side upward curved surface 16b of the second protrusion-side contact portion and the recess-side upward inclined surface 8b of the second recess-side contact portion, and the protrusion-side downward curved surface 16c of the second protrusion-side contact portion and the recess-side downward inclined surface 8c of the second recess-side contact portion are in contact with each other. That is, the second protrusion 16 of the second core back portion 11 is in contact with the linear second recess-side contact portion of the adjacent second core back portion 11. The second protrusion 16 and the second recess 13 are in contact with each other at two positions, that is, the protrusion-side upward curved surface 16b and the recess-side upward inclined surface 8b on the radially inner side, and the protrusion-side downward curved surface 16c and the recess-side downward inclined surface 8c on the radially outer side, with the vertex 16a of the second protrusion 16 being interposed therebetween.

With such a configuration, the linear first recess-side contact portion of the first core hack portion 6 comes into contact with the first protrusion 15 of the adjacent first core hack portion 6, and the linear second recess-side contact portion of the second core back portion 11 comes into contact with the second protrusion 16 of the adjacent second core back portion 11. Therefore, the radially inward force and the radially outward force are determined by the shapes of the first recess-side contact portion and the second recess-side contact portion. As a result, the radial position between the core pieces 2 can be adjusted to an appropriate position.

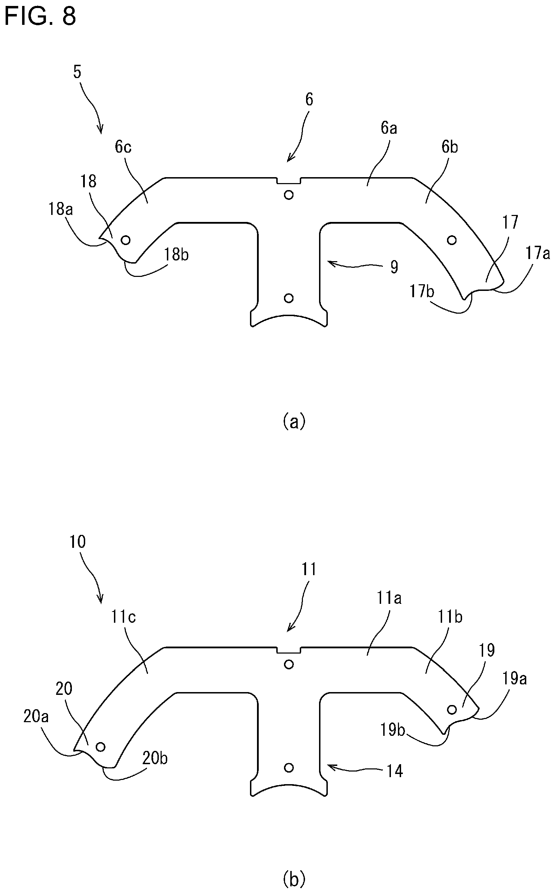

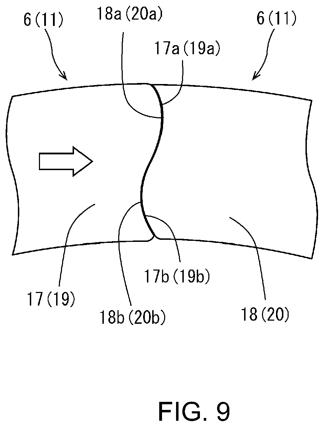

Next, a stator core 1 that is a third embodiment of the stator core 1 according to the present invention will be described with reference to FIGS. 8 and 9.

As illustrated in FIG. 8(a), the first core back portion 6 has a first first-side uneven portion 17 formed of a curved surface in which an arc-shaped protrusion protruding in the circumferential direction and an arc-shaped recess recessed in the circumferential direction continue at a first-side end in the circumferential direction. The first first-side uneven portion 17 has a protrusion-side curved surface 17a protruding in the circumferential direction as a first protrusion-side contact portion, and has a recess-side curved surface 17b recessed in the circumferential direction as a first recess-side contact portion. In addition, the first core back portion 6 has a first second-side uneven portion 18 formed of a curved surface in which an arc-shaped protrusion protruding in the circumferential direction and an arc-shaped recess recessed in the circumferential direction continue at a second-side end in the circumferential direction. The first second-side uneven portion 18 has a protrusion-side curved surface 18a protruding in the circumferential direction as the first protrusion-side contact portion, and has a recess-side curved surface 18b recessed in the circumferential direction as the first recess-side contact portion.

At the first-side end in the circumferential direction of the first core back portion 6, the first protrusion-side contact portion and the first recess-side contact portion are arranged from the radially outer side toward the radially inner side. At the second-side end in the circumferential direction of the first core back portion 6, the first recess-side contact portion and the first protrusion-side contact portion are arranged from the radially outer side toward the radially inner side. The outer shape of the first recess-side contact portion is the same as the outer shape of the first protrusion-side contact portion. As a result, the first first-side uneven portion 17 of the first core back portion 6 is fitted to the first second-side uneven portion 18 of the adjacent first core back portion 6.

As illustrated in FIG. 8(b), the second core back portion 11 has a second first-side uneven portion 19 formed of a curved surface in which an arc-shaped protrusion protruding in the circumferential direction and an arc-shaped recess recessed in the circumferential direction continue at the first-side end in the circumferential direction. The second first-side uneven portion 19 has a protrusion-side curved surface 19a protruding in the circumferential direction as the second protrusion-side contact portion, and has a recess-side curved surface 19b recessed in the circumferential direction as the second recess-side contact portion. In addition, the second core back portion 11 has a second second-side uneven portion 20 formed of a curved surface in which an arc-shaped protrusion protruding in the circumferential direction and an arc-shaped recess recessed in the circumferential direction continue at the second-side end in the circumferential direction. The second second-side uneven portion 20 has a protrusion-side curved surface 20a protruding in the circumferential direction as the second protrusion-side contact portion, and has a recess-side curved surface 20b recessed in the circumferential direction as the second recess-side contact portion.

At the first-side end in the circumferential direction of the second core back portion 11, the second protrusion side contact portion and the second recess-side contact portion are arranged from the radially outer side toward the radially inner side. At the second-side end in the circumferential direction of the second core back portion 11, the second recess-side contact portion and the second protrusion-side contact portion are arranged from the radially outer side toward the radially inner side. The outer shape of the second recess-side contact portion is the same as the outer shape of the second protrusion-side contact portion. As a result, the second uneven portion 18 of the second core back portion 11 is fitted to the second uneven portion 18 of the adjacent second core back portion 11 without any gap.

As illustrated in FIG. 9, between the first first-side uneven portion 17 of the first core back portion 6 and the first second-side uneven portion 18 of the adjacent first core back portion 6, the first protrusion-side contact portion and the first recess-side contact portion are in contact with each other. That is, at the first-side end in the circumferential direction of the first core back portion 6, the first protrusion-side contact portion on the radially outer side is in contact with the first recess-side contact portion of the adjacent first core back portion 6. Further, at the first-side end in the circumferential direction of the first core back portion 6, the first recess-side contact portion on the radially inner side is in contact with the first protrusion-side contact portion of the adjacent first core back portion 6. Further, at the second-side end in the circumferential direction of the first core back portion 6, the first recess-side contact portion on the radially outer side is in contact with the first protrusion-side contact portion of the adjacent first core back portion 6. Furthermore, at the second-side end in the circumferential direction of the first core back portion 6, the first protrusion-side contact portion on the radially inner side is in contact with the first recess-side contact portion of the adjacent first core back portion 6.

Between the second first-side uneven portion 19 of the second core back portion 11 and the second second-side uneven portion 20 of the adjacent second core back portion 11, the second protrusion-side contact portion and the second recess-side contact portion are in contact with each other. That is, at the first-side end in the circumferential direction of the second core back portion 11, the second protrusion-side contact portion on the radially outer side is in contact with the second recess-side contact portion of the adjacent second core back portion 11. Further, at the first-side end in the circumferential direction of the second core back portion 11, the second recess-side contact portion on the radially inner side is in contact with the second protrusion-side contact portion of the adjacent second core back portion 11. At the second-side end in circumferential direction of the second core back portion 11, the second recess-side contact portion on the radially outer side is in contact with the second protrusion-side contact portion of the adjacent second core back portion 11. Further, at the second-side end in the circumferential direction of the second core back portion 11, the second protrusion-side contact portion on the radially inner side is in contact with the second recess-side contact portion of the adjacent second core back portion 11.

In the stator core 1 including the plurality of core pieces 2, the first recess-side contact portion and the first protrusion-side contact portion, and the second recess-side contact portion and the second protrusion-side contact portion, which are aligned in the radial direction of the first core back portion 6 and the second core back portion 11, are in contact with each other, so that the relative position between the core pieces 2 is determined. As a result, the axial positional deviation between the core pieces 2 can be suppressed, and the radial position of the core piece 2 can be adjusted to an appropriate position.

In the first embodiment, the first core back portion 6 has the first protrusion 7 at the first-side end in the circumferential direction and the first recess 8 at the second-side end in the circumferential direction, but the positions of the first protrusion 7 and the first recess 8 in the first core back portion 6 are not limited. Regarding the first core back portion 6 and the first core hack portion of the core piece 2 adjacent thereto in the circumferential direction, it is only necessary that either one of them has the first protrusion 7 and the other has the first recess 8 and that the first protrusion 7 and the first recess 8 face each other. For example, the first core back portion 6 may have the first protrusions 7 or the first recesses 8 on both side ends. The same applies to the second core back portion 11. Further, the arrangement of the first protrusion 7 and the first recess 8 in the first core back portion 6 does not define the arrangement of the second protrusion 12 and the second recess 13 in the second core back portion 11. That is, the first protrusion 7 may be provided at a first-side end in the circumferential direction of the first core back portion 6, and the second recess 13 may be provided at the first-side end in the circumferential direction of the second core back portion 11. Also in the second embodiment, the positions and shapes of the first first-side uneven portion and the first second-side uneven portion of the first core back portion 6 are not limited.

The annular stator core 1 configured as described above includes the core piece 2 in which at least the first laminated member 5 and the second laminated member 10 are laminated in the first embodiment. The first laminated member 5 includes the first core back portion 6 extending in the circumferential direction and a first tooth portion 9 extending radially inward from the first core bag portion 6. The second laminated member 10 includes the second core back portion 11 extending in the circumferential direction and the second tooth portion 14 extending radially inward from the second core back portion 11. Both end positions in the circumferential direction of the first core back portion 6 are different from both end positions in the circumferential direction of the second core back portion 11. One of the first core back portion 6 and the first core back portion 6 of the core piece 2 adjacent thereto in the circumferential direction has the first protrusion 7 protruding in the circumferential direction, the other of the first core back portion 6 and the first core back portion 6 of the core piece 2 adjacent thereto has the first recess 8 recessed in the circumferential direction, the first protrusion 7 and the first recess 8 face each other, one of the second core back portion 11 and the second core back portion 11 of the core piece 2 adjacent thereto has the second protrusion 12 protruding in the circumferential direction, and the other of the second core back portion 11 and the second core back portion 11 of the core piece 2 adjacent thereto has the second recess 13 recessed in the circumferential direction, the second protrusion 12 and the second recess 13 face each other, the first core back portion 6 and the first core back portion 6 of the core piece 2 adjacent thereto are in contact with each other on the radially outer side and the radially inner side sandwiching the vertex 7a of the first protrusion 7, and the second core back portion 11 and the second core back portion 11 of the core piece 2 adjacent thereto is in contact with each other on the radially outer side and the radially inner side sandwiching the vertex 12a of the second protrusion 12.

Since the one core piece 2 and the other core piece 2 adjacent thereto that are configured as described above are configured such that both end positions in the circumferential direction of the first laminated member 5 and the second laminated member 10 constituting the core piece 2 are alternately arranged, the adjacent core pieces 2 are meshed with each other and connected to each other, and the position in the central axis P direction is determined. In addition, since the first protrusion 7 and the first recess 8 of the first core back portion 6 and the second protrusion 12 and the second recess 13 of the second core back portion 11 are in contact with each other at two positions sandwiching the vertex of each protrusion, a radially inward force and a radially outward force are generated in the first core back portion 6 and the second core back portion 11. As a result, the stator core 1 can suppress the axial positional deviation between the core pieces 2 and adjust the radial position between the core pieces 2 to an appropriate position only by connecting the core pieces 2 to each other.

The above-described embodiments are merely representative forms, and various modifications can be made without departing from the gist of one embodiment. It goes without saying that the present invention can be implemented in various forms, and the scope of the present invention is indicated by the description of the claims, and further includes equivalent meanings described in the claims and all modifications within the scope.

### INDUSTRIAL APPLICABILITY

The present invention is applicable to the annular stator core 1.

### REFERENCE SIGNS LIST

- 1: stator core
- 2: core piece
- 5: first laminated member
- 6: first core back portion
- 7: first protrusion
- 8: first recess
- 9: first tooth portion
- 10: second laminated member
- 11: second core back portion
- 12: second protrusion
- 12a: vertex
- 13: second recess
- 14: second tooth portion

## Claims

1. A stator core in an annular shape extending along a central axis, the stator core comprising
a core piece in which at least a first laminated member and a second laminated member are laminated, wherein
the first laminated member includes:
a first core back portion extending in a circumferential direction; and
a first tooth portion extending radially inward from the first core bag portion,
the second laminated member includes:
a second core back portion extending in the circumferential direction; and
a second tooth portion extending radially inward from the second core bag portion,
both circumferential end positions of the first core back portion are different from both circumferential end positions of the second core back portion,
one of the first core back portion and a first core back portion of an adjacent core piece in the circumferential direction has a first protrusion protruding in the circumferential direction,
another of the first core back portion and the first core back portion of the adjacent core piece has a first recess recessed in the circumferential direction,
the first protrusion and the first recess face each other,
one of the second core back portion and a second core back portion of the adjacent core piece has a second protrusion protruding in the circumferential direction,
another of the second core back portion and the second core back portion of the adjacent core piece has a second recess recessed in the circumferential direction,
the second protrusion and the second recess face each other,
the first core back portion and the first core back portion of the adjacent core piece are in contact with each other on a radially outer side and on a radially inner side sandwiching a vertex of the first protrusion, and
the second core back portion and the second core back portion of the adjacent core piece are in contact with each other on a radially outer side and on a radially inner side sandwiching a vertex of the second protrusion.

2. The stator core according to claim 1, wherein
between the first core back portion and the first core back portion of the adjacent core piece, the first recess contacts at two positions on the radially outer side and the radially inner side sandwiching the vertex of the first protrusion, and
between the second core back portion and the second core back portion of the adjacent core piece, the second recess contacts at two positions on the radially outer side and the radially inner side sandwiching the vertex of the second protrusion.

3. The stator core according to claim 1 or 2, wherein
the first recess includes a first recess-side contact portion in a linear shape,
the second recess includes a second recess-side contact portion in a linear shape,
the first recess-side contact portion is in contact with the first protrusion of the first core back portion of the adjacent core piece, and
the second recess-side contact portion is in contact with the second protrusion of the second core back portion in the adjacent core piece.

4. The stator core according to any one of claims 1 to 3, wherein
the first protrusion includes a first protrusion-side contact portion in a linear shape,
the second protrusion includes a second protrusion-side contact portion in a linear shape,
the first protrusion-side contact portion is in contact with the first recess-side contact portion of the first core back portion of the adjacent core piece, and
the second protrusion-side contact portion is in contact with the second recess-side contact portion of the second core back portion in the adjacent core piece.

5. A stator core in an annular shape extending along a central axis, the stator core comprising
a core piece in which at least a first laminated member and a second laminated member are laminated, wherein
the first laminated member includes:
a first core back portion extending in a circumferential direction; and
a first tooth portion extending radially inward from the first core bag portion,
the second laminated member includes:
a second core back portion extending in the circumferential direction; and
a second tooth portion extending radially inward from the second core bag portion,
when viewed from an axial direction, both circumferential end positions of the first core back portion and both circumferential end positions of the second core back portion are different,
the first core back portion includes a first uneven portion formed of a curved surface continuous with both side ends in the circumferential direction,
the second core back portion includes a second uneven portion formed of a curved surface continuous with both side ends in the circumferential direction,
the first uneven portion of the first core back portion and a first uneven portion of a first core back portion of an adjacent core piece are in contact with each other, and
the second uneven portion of the second core back portion and a second uneven portion of a second core back portion of the adjacent core piece are in contact with each other.
